# EUROPEAN PATENT SPECIFICATION

(11) **EP 3 938 171 B1**
(45) Date of publication and mention of the grant of the patent: **15.01.2025**
(21) Application number: 20701198.2
(22) Date of filing: 24.01.2020
(51) Int. Cl.: B29C 53/24, A24C 5/18

(54) **METHODS AND APPARATUS FOR MANUFACTURING A CORRUGATED WEB**
VERFAHREN UND VORRICHTUNG ZUR HERSTELLUNG EINER GEWELLTEN BAHN
PROCÉDÉS ET APPAREIL DE FABRICATION D'UNE BANDE ONDULÉE

(30) Priority: 13.03.2019 EP 19162523
(43) Date of publication of application: 19.01.2022
(73) Proprietor: Philip Morris Products S.A., 2000 Neuchâtel (CH)
(72) Inventor: BATISTA, Rui, Nuno, 2000 Neuchâtel (CH); PRESTIA, Ivan, 40069 Zola Predosa, Bologna (IT)
(74) Representative: HGF
(86) International application number: PCT/EP2020/051756
(87) International publication number: WO 2020/182359

(56) References cited:
- EP-A1- 2 625 974
- WO-A1-2013/178769
- WO-A1-2016/071267
- WO-A1-2018/210743
- WO-A2-2007/147065
- US-A- 4 807 809
- YESMOKE: "Cigarette Factory - Filter Making And Distribution System Processes", 22 January 2008 (2008-01-22), XP093149501, Retrieved from the Internet <URL:https://www.youtube.com/watch?v=Goq1Yr1HiQE&t=49s> [retrieved on 20240409]

## Description

The present disclosure relates to a method and apparatus for manufacturing a corrugated web. In particular, the present invention relates to a method and apparatus for manufacturing a corrugated web for an aerosol-generating article.

Conventional cigarettes combust tobacco and generate temperatures that release volatile compounds. Temperatures in the burning tobacco can reach above 800 degrees Celsius and such high temperatures drive off much of the water contained in the smoke evolved from the tobacco. Other aerosol-generating articles in which an aerosol-forming substrate, such as a tobacco containing substrate, is heated rather than combusted are also known in the art. Examples of systems using aerosol-generating articles include systems that heat a tobacco containing substrate between 200 degrees Celsius and 400 degrees Celsius to produce an aerosol. Despite the lower temperature of aerosol formation, the aerosol stream generated by such systems may have a higher perceived temperature than conventional cigarette smoke due to a higher moisture content, compared to combustible smoking articles.

Typically, aerosol-generating articles comprise a plurality of elements assembled in the form of a rod. The plurality of elements generally includes an aerosol-forming substrate and an aerosol-cooling element located downstream from the aerosol-forming substrate within the rod. The aerosol-cooling element may alternatively be referred to as a heat exchanger based on its functionality. One or both of the aerosol-cooling element and the aerosol-forming substrate may comprise a plurality of axial channels to provide air-flow in the axial direction. The plurality of axial channels may be defined by a sheet that has been crimped and gathered within the rod to form the channels. In such examples, the crimped sheet is generally formed by crimping a substantially continuous web and cutting a plurality of crimped sheets from the crimped and gathered web.

Methods and apparatuses for manufacturing a crimped web for use in an aerosol-generating article are known in the art. Known methods of manufacturing a crimped web generally involve feeding a substantially continuous web between a pair of interleaved rollers to apply a plurality of parallel, equidistant longitudinally extending crimp corrugations to the continuous web. The crimped web is subsequently gathered by a rod-making machine to form a continuous rod having a plurality of axial channels. The rod is then wrapped by the rod-making machine and cut into smaller segments to form an aerosol-forming substrate or aerosol-cooling element for an aerosol-generating article.

However, such known methods require large and expensive crimping machinery to be located upstream of the rod-making machine, and each rod-making machine in a factory requires its own dedicated crimping machine. In turn, this results in a requirement for a larger factory floor area to accommodate the footprints of the crimping machines. Moreover, in the event that a crimping requires maintenance or has other downtime, the associated rod-making machine may no longer have a supply of crimped web may need to stop.

In addition, where the web is made of a polymeric material such as for example polylactic acid (PLA), the web will have a tendency to revert to a flatter configuration after crimping because webs made of polylactic acid have elastic properties at ambient temperatures of around 20 degrees Celsius, which is typically the temperature at which crimping takes place between a pair of crimping rollers. Moreover, web material variability and stoppage of the crimping machine during processing may lead to imperfections in the crimped web and result in waste.

US4807809 discloses a rod making apparatus equipped with a web preforming unit for making rods for use in the manufacture of smoking products. A web of sheet-like material is passed through the web preforming unit and is pleated to form a rod-like composite. The rod-like composite then is circumscribed with wrapping material to provide a rod. The web preforming unit includes an outer frustoconical tube and an inner frustoconical member. The frustoconical member is concentric to the tube, and is positioned coaxially with respect to the tube such that an annular region is formed between the outer surface of the member and the inner surface of the tube.

WO2016/071267 discloses a method of manufacturing a crimped web for an aerosol-generating article. The method includes the steps of: feeding a substantially continuous web to a set of crimping rollers comprising a first roller and a second roller, each of which is corrugated across at least a portion of its width, and crimping the substantially continuous web to form the crimped web by feeding the substantially continuous web between the first and second rollers in a longitudinal direction of the web such that the corrugations of the first and second rollers apply a plurality of longitudinally extending and substantially parallel crimp corrugations to the substantially continuous web. The pitch values of the corrugations of one or both of the first and second rollers vary across the width of the rollers such that the pitch values of the crimp corrugations vary across the width of the crimped web. An apparatus for manufacturing a crimped web for an aerosol-article is also provided, along with a method and apparatus for manufacturing an aerosol-generating article component including a gathered crimped sheet having a plurality of substantially parallel crimp corrugations, the pitch values of which vary across the width of the sheet.

EP2625974 discloses an aerosol-generating article comprising a plurality of elements assembled in the form of a rod. The plurality of elements includes an aerosol-forming substrate, and a mouthpiece filter located downstream from the aerosol-forming substrate within the rod. The aerosol-generating article further comprises a volatile flavour-generating component disposed between the aerosol-forming substrate and the mouthpiece filter within the rod. The volatile flavour-generating component may be supported by a low resistance support element located between the aerosol-forming substrate and the mouthpiece filter.

WO2013/178769 discloses a system comprising an electrically-operated aerosol-generating apparatus and an aerosol-generating article for use with the apparatus, the aerosol-generating article comprising an aerosol-forming substrate comprising a rod comprising a first sheet comprising an aerosol-forming material and a second sheet of non-tobacco material, the first and second sheets being gathered together and circumscribed by a wrapper. The second sheet preferably comprises a material that functions to modify an aerosol evolved from the aerosol-forming material or modifies other properties of the rod.

It would be desirable to provide a method and apparatus for manufacturing a corrugated web for an aerosol-generating article that at least partially addresses these problems.

Viewed from a first aspect, there is provided a method of manufacturing a corrugated polymeric material web for an aerosol-generating article, the method comprising the steps of:
heating polymeric material pellets to form a polymeric material melt;
forming a polymeric material web from the polymeric material melt and working the polymeric material web at an elevated temperature to form a corrugated polymeric material web; and
winding the corrugated polymeric material web onto a bobbin.

By working the polymeric material web at an elevated temperature while the polymeric material web has soft, malleable properties, the corrugations formed in the polymeric material web will tend to remain well formed after the polymeric material web cools to ambient temperature. Advantageously, the polymeric material is worked at a temperature at, above or close to the glass transition temperature of the polymeric material.

In the following, by way of example, a web of polylactic acid is described. While a web of polylactic acid may be a preferred polymer, the described process and resulting product can be made of any other suitable polymer, for example polyethylene, polypropylene, polyvinyl chloride, polyethylene terephthalate or cellulose acetate.

When using polymeric materials other than polylactic acid, such polymeric materials preferably have a glass transition temperature in a range of 20 degrees Celsius higher or lower than the glass transition temperature of polylactic acid. For example, the polymeric material is chosen to have a glass transition temperature in a range from 40 degrees Celsius to 85 degrees Celsius. Alternatively or in addition, such polymeric materials preferably have a melting point in a range of 50 degrees Celsius higher or lower than the melting point of polylactic acid. For example, the polymeric material is chosen to have a melting point in a range from 123 degrees Celsius to 228 degrees Celsius.

The glass transition temperature of polylactic acid is around 60 to 65 degrees Celsius, and the melting point temperature is around 173 to 178 degrees Celsius. There is some variation between different samples of polylactic acid when using different plasticizers. Moreover, the relative amounts of different stereoisomers in the polylactic acid melt can also affect the glass transition and melting point temperatures. By working the polylactic acid web at temperatures at, above or close to the glass transition temperature, corrugations formed in the web will tend to be set after the polylactic acid web has cooled, thus providing a corrugated web with reliable corrugation properties. Different corrugation angles, patterns and pitches can be formed and set in the polylactic acid web so as to provide different properties when used in aerosol-cooling elements. This applies also to polymeric materials other than polylactic acid.

In prior art crimping processes, where a polylactic acid web is crimped between a pair of corrugated crimping rollers at an ambient temperature of around 20 degrees Celsius (well below the glass transition temperature), the web will have a degree of elastic return which will reduce the efficiency of the crimping process. In contrast, by working a polylactic acid web at the elevated temperature when the web is in a soft and relatively malleable state, it has been found that a more reliable result is obtained, and that the stability of the corrugations is not affected to the same degree by the speed of the polylactic acid web. This applies also to polymeric materials other than polylactic acid.

In addition, by winding the corrugated polymeric material web onto a bobbin, it becomes possible to feed a rod-making machine directly with a corrugated polymeric material web from the bobbin without requiring a crimping machine adjacent to each rod-making machine. This saves on equipment costs and factory floor space.

Preferably, the corrugated polymeric material web is cooled to below the glass transition temperature before winding onto the bobbin. This helps to reduce the risk of the corrugations being flattened while the corrugated polymeric material web is still soft and malleable. This may be done by way of cooling rollers, which may be made of a thermally conductive material such as a metal and provided with interior channels for passage of a heat exchange fluid. Alternatively, a heat exchange fluid such as cooled air may be passed or blown across one or both surfaces of the corrugated polymeric material web.

As used herein, the term 'polylactic acid', also known as poly(lactic acid) or PLA, refers to a biodegradable aliphatic polyester comprising the monomer below, which is well suited for disposable applications. Polylactic acid may be plasticized with various biocompatible plasticizers.

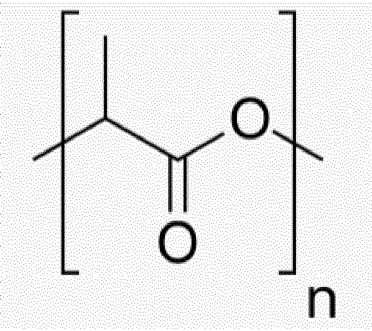

As used herein, the term 'polylactic acid melt' means polylactic acid heated to above its melting point temperature so that it is in a liquid state.

As used herein, the term 'polymeric material' refers to polymeric materials including polylactic acid, polyethylene, polypropylene, polyvinylchloride, polyethylene terephthalate and cellulose acetate.

As used herein, the term 'polymeric material melt' means polymeric material heated to above its melting point temperature so that it is in a liquid state.

As used herein, the term 'elevated temperature' means a temperature significantly higher than ambient room temperature. In some embodiments, the term 'elevated temperature' means a temperature at, above or not substantially below the glass transition temperature of the polymeric material being used. For polylactic acid, the glass transition temperature is typically 60 to 65 degrees Celsius.

As used herein, the term 'glass transition temperature' is the temperature above which the polymeric material is in a relatively soft, rubbery state and below which the polymeric material is in a relatively hard, glassy state.

As used herein, the term 'working' means applying at least locally a change to the form of the material, wherein the new form is not flat, like for example, waves or corrugations to the polymeric material web, while the material is at an elevated temperature compared to room temperature. Such changes in the form of the material may be applied by crimping rollers, extrusion dies, extrusion tanks or boxes, bars, curved shafts, multiple rollers or others as well as combinations of the aforementioned tools and devices.

As used herein, the term 'bobbin' refers to a spindle or cylinder, with or without end flanges, onto which the polymeric material web is wound after being worked to form corrugations therein.

As used herein, the term 'aerosol-generating article' refers to an article comprising an aerosol-forming substrate that is capable of releasing volatile compounds that can form an aerosol, for example by heating, combustion or a chemical reaction. As used herein, the term 'aerosol-forming substrate' is used to describe a substrate capable of releasing volatile compounds, which can form an aerosol. The aerosols generated from aerosol-forming substrates of aerosol-generating articles according to the invention may be visible or invisible and may include vapours (for example, fine particles of substances, which are in a gaseous state, that are ordinarily liquid or solid at room temperature) as well as gases and liquid droplets of condensed vapours.

As used herein, the term 'aerosol-cooling element' is used to describe an element having a large surface area and a predetermined resistance to draw. In use, an aerosol formed by volatile compounds released from the aerosol-forming substrate passes over and is cooled by the aerosol-cooling element before being inhaled by a user. In contrast to high resistance to draw filters and other mouthpieces, aerosol-cooling elements have a low resistance to draw. Chambers and cavities within an aerosol-generating article are also not considered to be aerosol cooling elements.

As used herein, the term 'web' denotes a laminar element having a width and length substantially greater than the thickness thereof.

As used herein, the term 'corrugated' denotes a sheet or web with a plurality of corrugations, undulations or striations oriented substantially parallel to each other or at least parallel to some of the other corrugations, undulations or striations.

As used herein, the term 'corrugations' denotes a plurality of substantially parallel ridges formed from alternating peaks and troughs joined by corrugation flanks. This includes, but is not limited to, corrugations having a square wave profile, sinusoidal wave profile, triangular profile, sawtooth profile, or any combination thereof.

As used herein, the term 'longitudinal direction' refers to a direction extending along, or parallel to, the length of a web or sheet.

As used herein, the term 'width' refers to a direction perpendicular to the length of a web or sheet, or in the case of a roller, parallel to the axis of the roller.

As used herein, the term 'pitch value' refers to the lateral distance between the troughs at either side of the peak of a particular corrugation. As used herein, the terms 'vary' and 'differ' refer to a deviation beyond that of standard manufacturing tolerances and in particular to values that deviate from each other by at least 5 percent.

As used herein, the term 'crimping roller' refers to a roller with corrugations extending circumferentially around the roller. When two crimping rollers are arranged adjacent and parallel to each other so that their corrugations interleave or almost touch each other, a flat polymeric material web can be passed between the crimping rollers and have corrugations imparted thereto.

As used herein, the term 'rod' denotes a generally cylindrical element of substantially circular or oval cross-section.

As used herein, the terms 'axial' or 'axially' refer to a direction extending along, or parallel to, the cylindrical axis of a rod.

As used herein, the terms 'gathered' or 'gathering' denote that a web or sheet is convoluted, or otherwise compressed or constricted substantially transversely to the cylindrical axis of the rod.

As used herein, the term 'amplitude value' refers to the height of a corrugation from its peak to the deepest point of the deepest directly adjacent trough.

As used herein, the term 'corrugation angle' refers to the angle between the corrugation flanks of a particular corrugation.

Working the polymeric material web may comprises passing the polymeric material web between at least two crimping rollers to form the corrugated polymeric material web.

In one embodiment, the polymeric material melt is first passed between at least two smooth rollers to form a flat polymeric material web, and the flat polymeric material web is subsequently passed between at least two crimping rollers while at the elevated temperature.

Preferably, the thickness of the flat web material is between about 20 micrometres and about 200 micrometres, more preferably between about 30 micrometres and about 120 micrometres, most preferably, between about 40 micrometres and about 80 micrometres.

In some embodiments, the polymeric material web is passed between multiple sets of crimping rollers, for example two sets of crimping rollers, three sets of crimping rollers, four sets of crimping rollers or five sets of crimping rollers. Each set or pair of crimping rollers may have a different depth of corrugations, or a different nip size (that is, a different spacing between the outer surfaces of adjacent crimping rollers). For example, successive sets or pairs of crimping rollers may have progressively smaller nip sizes so as to facilitate the production of very thin corrugated polymeric material webs. In some embodiments, each set or pair of crimping rollers is configured to reduce a thickness of the polymeric material web by a predetermined amount, for example between 10 percent and 50 percent of the thickness of the polymeric web prior to passage between the respective set or pair of rollers.

In some embodiments, the polymeric material melt is first passed between at least two smooth rollers to form the polymeric material web, and the polymeric material web is subsequently passed over or between shaping members configured to impart corrugations to the polymeric material web while at the elevated temperature. The shaping members may take the form of bars, curved shafts or multiple bending rollers.

In some embodiments, forming a polymeric material web from the polymeric material melt and working the polymeric material web comprises extruding the polymeric material melt through an extrusion die with a corrugated profile so as to form the corrugated polymeric material web.

In these embodiments, the polymeric material melt may be heated in an extruder tank or box and forced through an appropriately configured extrusion die to form the corrugated polymeric material web. The extrusion die may have an extrusion orifice defining the width, thickness and cross-sectional corrugation profile of the corrugated polymeric material web. For example, the extrusion orifice may be a slot with a zig-zag or undulating configuration.

The corrugated polymeric material web may additionally be passed over or between shaping members configured to impart further corrugations to the corrugated polymeric material web while at the elevated temperature. The shaping members may take the form of bars, curved shafts or multiple bending rollers.

The elevated temperature may be a temperature higher than a temperature 20 degrees Celsius below the glass transition temperature of the polymeric material, optionally a temperature higher than a temperature 10 degrees Celsius below the glass transition temperature of the polymeric material, optionally a temperature higher than a temperature 5 degrees Celsius below the glass transition temperature of the polymeric material, or optionally a temperature not less than the glass transition temperature of the polymeric material. The glass transition temperature of polylactic acid is in a range from 60 to 65 degrees Celsius. The glass transition temperatures of other polymers can be determined from scientific literature or from experiment.

The corrugated polymeric material web may have a zig-zag corrugated profile with pointed peaks and troughs. Alternatively, the corrugated polymeric material web may have an undulating corrugated profile with curved peaks and troughs.

Preferably, the pitch values of substantially all of the corrugations are in a range from about 0.5 millimetres (mm) to about 1.7 millimetres (mm), preferably from about 0.7 mm to about 1.5 mm, and most preferably from about 0.9 mm to about 1.3 mm. This has been found to provide particularly satisfactory resistance to draw values and uniformity when the corrugated polymeric material web is gathered and wrapped to form an aerosol-cooling element in an aerosol-generating article.

In some embodiments, the corrugations may have a varying pitch across the width of the corrugated polymeric material web. This can provide a number of advantages, including more uniform distribution of channels in an aerosol-cooling element made from gathered corrugated polymeric material web, since the corrugations on the gathered web will have less tendency to match up and nest with each other.

The pitch values of the majority of corrugations may be substantially the same across the width of the corrugated polymeric material web with a small number of corrugations, for example one or two, having a substantially different pitch value or values so that the pitch values of the corrugations vary across the width of the corrugated polymeric material web.

In some embodiments, at least 10 percent of the corrugations have a pitch value that differs from the pitch value of at least one directly adjacent corrugation. In further embodiments, at least 40 percent of the corrugations have a pitch value that differs from the pitch value of at least one directly adjacent corrugation. In some embodiments, at least 70 percent of the corrugations have a pitch value that differs from the pitch value of at least one directly adjacent corrugation. In some embodiments, all or substantially all of the corrugations of corrugated polymeric material web have a pitch value that differs from the pitch value of at least one directly adjacent corrugation. This further reduces the risk of corrugations on a gathered corrugated polymeric material web from matching up and nesting against each other.

The pitch value of the corrugations of the corrugated polymeric material web may be any suitable amount.

At least some of the corrugations of the corrugated polymeric material web may each have an amplitude value that differs from the amplitude value of at least one directly adjacent corrugation. In such embodiments, the amplitude values may be of any suitable amount. For example, the amplitude values of the corrugations may vary from about 0.1 mm to about 1.5 mm, or from about 0.2 mm to about 1 mm, or from about 0.35 mm to about 0.75 mm.

Alternatively, or in addition, to provide pitch values that vary across the width of the corrugated polymeric material web, at least some corrugations may each have a corrugation angle that differs from the corrugation angle of at least one directly adjacent corrugation. In such embodiments, the corrugation angles may be of any suitable value. For example, the corrugation angles of the corrugations of the corrugated polymeric material web may vary from about 30 degrees to about 90 degrees, or from about 40 degrees to about 80 degrees, or from about 55 degrees to about 75 degrees.

One or more of the corrugations may be symmetrical about the radial direction. That is, the angle between each flank of a corrugation and the radial direction, or the "flank angle", may be the same and equal to half the corrugation angle. Alternatively, one or more of the corrugations are asymmetrical about the radial direction. That is, the flank angles of both flanks of a corrugation may be different.

One or more of the troughs between directly adjacent corrugations may be symmetrical about the radial direction. That is, the angle between directly adjacent flanks of directly adjacent corrugations and the radial direction may be the same and equal to half the trough angle. Alternatively, one or more of the troughs between directly adjacent corrugations may be asymmetrical about the radial direction. That is, the flank angles of directly adjacent flanks forming a trough may be different.

Where the corrugation angles vary across the width of the corrugated polymeric material web, the amplitude values of the corrugations may be substantially the same, or they may also vary across the width of the corrugated polymeric material web. Where the amplitude values vary across the width of the corrugated polymeric material web, the corrugation angles of the corrugations may be substantially the same, or they may also vary across the width of the corrugated polymeric material web.

Also disclosed, but not claimed, is a bobbin comprising a corrugated polymeric material web formed by the method of the first aspect wound onto a spindle.

Such a bobbin can be used to feed corrugated polymeric material web directly into a rod-making machine, for example to make aerosol-cooling elements, without the need for an in-line crimping machine.

Viewed from a second aspect, there is provided a method of forming rod-shaped articles, comprising gathering a corrugated polymeric material web into a substantially cylindrical bundle by way of a funnel, wrapping the bundle in a wrapper to form a wrapped bundle, and cutting the wrapped bundle into rod-shaped lengths, characterised in that the corrugated polymeric material web is unwound in a corrugated state from a bobbin prior to gathering.

The bobbin of corrugated polymeric material web may be made by the method of the first aspect.

Also disclosed, but not claimed, is an aerosol-generating article comprising a rod-shaped article made by the method of the second aspect.

Also disclosed, but not claimed, is an apparatus for forming a corrugated polymeric material web, comprising:
a container to heat polymeric material pellets to form a polymeric material melt;
a roller or an extruder to work the polymeric material melt to form a corrugated polymeric material web; and
a winder to wind the corrugated polymeric material web onto a bobbin.

Viewed from a third aspect, there is provided a rod-making apparatus comprising a bobbin wound with a corrugated polymeric web, a funnel to gather the corrugated polymeric material web into a substantially cylindrical bundle after the corrugated polymeric material web has been unwound from the bobbin in a corrugated state, a wrapper to wrap the bundle so as to form a wrapped bundle, and a cutter to cut the wrapped bundle into rod-shaped lengths.

The rod-shaped lengths may be used as aerosol-cooling elements in aerosol-generating articles.

The aerosol-cooling element preferably offers a low resistance to the passage of air through the rod. Preferably, the aerosol-cooling element does not substantially affect the resistance to draw of the aerosol-generating article. Thus, it is preferred that there is a lowpressure drop from an upstream end of the aerosol-cooling element to a downstream end of the aerosol-cooling element. To achieve this, it is preferred that the porosity in an axial direction is greater than 50 percent and that the airflow path through the aerosol-cooling element is relatively uninhibited. The axial porosity of the aerosol-cooling element is defined by a ratio of the cross-sectional area of material forming the aerosol-cooling element and an internal cross-sectional area of the aerosol-generating article at the portion containing the aerosol-cooling element.

The terms "upstream" and "downstream" may be used to describe relative positions of elements or components of the aerosol-generating article. For simplicity, the terms "upstream" and "downstream" as used herein refer to a relative position along the rod of the aerosol- generating article with reference to the direction in which the aerosol is drawn through the rod.

It is desirable that the aerosol-cooling element has a high total surface area. Thus, in preferred embodiments the aerosol-cooling element is formed from a corrugated polymeric material web that is gathered to form the channels. In preferred embodiments, the aerosol-cooling element is formed from a gathered corrugated polymeric material web according to any of the embodiments described above. In some embodiments, the aerosol-cooling element may be formed from a corrugated polymeric material web having a thickness of between about 5 micrometres and about 500 micrometres, for example between about 10 micrometres and about 250 micrometres. In some embodiments, the aerosol-cooling element has a total surface area of between about 300 square millimetres per millimetre of length and about 1000 square millimetres per millimetre of length. In other words, for every millimetre of length in the axial direction the aerosol-cooling element has between about 300 square millimetres and about 1000 square millimetres of surface area. Preferably, the total surface area is about 500 square millimetres per millimetre of length.

The aerosol-cooling element may be formed from a material that has a specific surface area of between about 10 square millimetres per milligram and about 100 square millimetres per milligram. In some embodiments, the specific surface area may be about 35 square millimetres per milligram.

Specific surface area can be determined by taking a material having a known width and thickness. For example, the material may be a polymeric material having an average thickness of 50 micrometres with a variation of plus or minus 2 micrometres. Where the material also has a known width, for example, between about 200 mm and about 250 mm, the specific surface area and density can be calculated.

When an aerosol that contains a proportion of water vapour is drawn through the aerosol-cooling element, some of the water vapour may condense on surfaces of the axial channels defined through the aerosol-cooling element. If water condenses, it is preferred that droplets of the condensed water are maintained in droplet form on a surface of the aerosol- cooling element rather than being absorbed into the material forming the aerosol-cooling element. Thus, it is preferred that the material forming the aerosol-cooling element is substantially non-porous or substantially non-absorbent to water.

The aerosol-cooling element may act to cool the temperature of a stream of aerosol drawn through the element by means of thermal transfer. Components of the aerosol will interact with the aerosol-cooling element and loose thermal energy.

The aerosol-cooling element may act to cool the temperature of a stream of aerosol drawn through the element by undergoing a phase transformation that consumes heat energy from the aerosol stream. For example, the material forming the aerosol-cooling element may undergo a phase transformation such as melting or a glass transition that requires the absorption of heat energy. If the element is selected such that it undergoes such an endothermic reaction at the temperature at which the aerosol enters the aerosol-cooling element, then the reaction will consume heat energy from the aerosol stream.

The aerosol-cooling element may act to lower the perceived temperature of a stream of aerosol drawn through the element by causing condensation of components such as water vapour from the aerosol stream. Due to condensation, the aerosol stream may be drier after passing through the aerosol-cooling element. In some embodiments, the water vapour content of an aerosol stream drawn through the aerosol-cooling element may be lowered by between about 20 percent and about 90 percent.

In some embodiments, the temperature of an aerosol stream may be lowered by more than 10 degrees Celsius as it is drawn through an aerosol-cooling element. In some embodiments, the temperature of an aerosol stream may be lowered by more than 15 degrees Celsius or more than 20 degrees Celsius as it is drawn through an aerosol-cooling element.

As noted above, the aerosol-cooling element may be formed from a corrugated polymeric material web that has been gathered into an element that defines a plurality of generally parallel channels, which in some embodiments extend generally axially, although in other embodiments they may extend in another direction. A cross-sectional profile of such an aerosol-cooling element may show the channels as being randomly oriented.

The aerosol-cooling element may comprise an outer tube or wrapper that contains or locates the parallel channels. For example, a flat web material that has been pleated, gathered, or folded, may be wrapped in a wrapper material, for example a plug wrapper, to form the aerosol-cooling element. In some embodiments, the aerosol-cooling element comprises a sheet of crimped material that is gathered into a rod-shape and bound by a wrapper, for example a wrapper of filter paper.

In some embodiments, the aerosol-cooling element is formed in the shape of a rod having a length of between about 7 mm and about 28 mm. For example, an aerosol-cooling element may have a length of about 18 mm. In some embodiments, the aerosol-cooling element may have a substantially circular cross-section and a diameter of about 5 mm to about 10 mm. For example, an aerosol-cooling element may have a diameter of about 7 mm.

In some embodiments, the water content of the aerosol is reduced as it is drawn through the aerosol-cooling element.

An aerosol-generating article may be a heated aerosol-generating article, which is an aerosol-generating article comprising an aerosol-forming substrate that is intended to be heated rather than combusted in order to release volatile compounds that can form an aerosol. A heated aerosol-generating article may comprise an on-board heating means forming part of the aerosol-generating article, or may be configured to interact with an external heater forming part of a separate aerosol-generating device

An aerosol-generating article may resemble a combustible smoking article, such as a cigarette. An aerosol-generating article may comprise tobacco, for example in the form of a homogenised tobacco material. An aerosol-generating article may be disposable. An aerosol-generating article may alternatively be partially-reusable and comprise a replenishable or replaceable aerosol-forming substrate.

As used herein, the term 'homogenised tobacco material' denotes material formed by agglomerating particulate tobacco.

A homogenised tobacco material may be in the form of a sheet. The homogenised tobacco material may have an aerosol-former content of greater than 5 percent on a dry weight basis. The homogenised tobacco material may alternatively have an aerosol former content of between 5 percent and 30 percent by weight on a dry weight basis. Sheets of homogenised tobacco material may be formed by agglomerating particulate tobacco obtained by grinding or otherwise comminuting one or both of tobacco leaf lamina and tobacco leaf stems; alternatively, or in addition, sheets of homogenised tobacco material may comprise one or more of tobacco dust, tobacco fines and other particulate tobacco byproducts formed during, for example, the treating, handling and shipping of tobacco. Sheets of homogenised tobacco material may comprise one or more intrinsic binders, that is tobacco endogenous binders, one or more extrinsic binders, that is tobacco exogenous binders, or a combination thereof to help agglomerate the particulate tobacco; alternatively, or in addition, sheets of homogenised tobacco material may comprise other additives including, but not limited to, tobacco and non- tobacco fibres, aerosol-formers, humectants, plasticisers, flavourants, fillers, aqueous and nonaqueous solvents and combinations thereof. The aerosol-forming substrate may be a solid aerosol-forming substrate. Alternatively, the aerosol-forming substrate may comprise both solid and liquid components. The aerosol- forming substrate may comprise a tobacco-containing material containing volatile tobacco flavour compounds, which are released from the substrate upon heating. Alternatively, the aerosol-forming substrate may comprise a non-tobacco material. The aerosol-forming substrate may further comprise an aerosol former. Examples of suitable aerosol formers are glycerine and propylene glycol.

If the aerosol-forming substrate is a solid aerosol-forming substrate, the solid aerosol-forming substrate may comprise, for example, one or more of: powder, granules, pellets, shreds, spaghettis, strips or sheets containing one or more of: herb leaf, tobacco leaf, fragments of tobacco ribs, reconstituted tobacco, homogenised tobacco, extruded tobacco and expanded tobacco. The solid aerosol-forming substrate may be in loose form, or may be provided in a suitable container or cartridge. For example, the aerosol-forming material of the solid aerosol-forming substrate may be contained within a paper or other wrapper and have the form of a plug. Where an aerosol-forming substrate is in the form of a plug, the entire plug including any wrapper is considered to be the aerosol-forming substrate.

Optionally, the solid aerosol-forming substrate may contain additional tobacco or non-tobacco volatile flavour compounds, to be released upon heating of the solid aerosol-forming substrate. The solid aerosol-forming substrate may also contain capsules that, for example, include the additional tobacco or non-tobacco volatile flavour compounds and such capsules may melt during heating of the solid aerosol-forming substrate or otherwise release their content, for example by the application of pressure, for example by rupturing the capsule or capsules manually.

The elements of the aerosol-generating article are preferably assembled by means of a suitable wrapper, for example a cigarette paper. A cigarette paper may be any suitable material for wrapping components of an aerosol-generating article in the form of a rod. Preferably, the cigarette paper holds and aligns the component elements of the aerosol-generating article when the article is assembled and hold them in position within the rod. Suitable materials are well known in the art.

It may be particularly advantageous for an aerosol-cooling element to be a component part of a heated aerosol-generating article with an aerosol-forming substrate formed from or comprising a homogenised tobacco material. In such embodiments, preferably, the heated tobacco material comprises an aerosol former content of greater than 5 percent on a dry weight basis. For example, the homogenised tobacco material may have an aerosol former content of between 5 percent and 30 percent by weight on a dry weight basis. An aerosol generated from such aerosol-forming substrates may be perceived by a user as too hot and the use of a high surface area aerosol-cooling element with low resistance to draw may reduce the perceived temperature of the aerosol to an acceptable level.

The aerosol-generating article may be substantially cylindrical in shape. The aerosol-generating article may be substantially elongate. The aerosol-generating article may have a length and a circumference substantially perpendicular to the length. The aerosol-forming substrate may be substantially cylindrical in shape. The aerosol-forming substrate may be substantially elongate. The aerosol-forming substrate may also have a length and a circumference substantially perpendicular to the length. The aerosol-forming substrate may be received in the aerosol-generating device such that the length of the aerosol-forming substrate is substantially parallel to the airflow direction in the aerosol-generating device. The aerosol-cooling element may be substantially elongate.

The aerosol-generating article may have a total length between approximately 30 mm and approximately 100 mm, preferably between about 35 mm and between about 60 mm. The aerosol-generating article may have an external diameter between approximately 5 mm and approximately 12 mm.

The aerosol-generating article may comprise a filter or mouthpiece or both a filter and a mouthpiece. The filter may be located at the downstream end of the aerosol-generating article. The filter may be a cellulose acetate filter plug. The filter is approximately 7 mm in length in one embodiment, but may have a length of between approximately 5 mm and approximately 10 mm. The aerosol-generating article may comprise a spacer element located downstream of the aerosol-forming substrate.

The aerosol-generating article may have a total length of approximately 45 mm. The aerosol-generating article may have an external diameter of approximately 7.2 mm. Further, the aerosol-forming substrate may have a length of approximately 10 mm. In other embodiments, the aerosol-forming substrate may have a length of approximately 12 mm. Further, the diameter of the aerosol-forming substrate may be between approximately 5 mm and approximately 12 mm, preferably between about 6 mm and about 9 mm.

Features described in relation to one aspect of the invention may also be applicable to the other aspects of the invention. The invention will be further described, by way of example only, with reference to the accompanying drawings in which:
FIGURE 1 shows a prior art apparatus for manufacturing a crimped web;
FIGURE 2 shows a first embodiment of the present disclosure;
FIGURE 3 shows a bobbin wound with corrugated polylactic acid web;
FIGURE 4 shows a cross section of a pair of forming rollers of the embodiment of Figure 2;
FIGURE 5 shows a cross section of an alternative forming roller;
FIGURE 6 shows a cross section of a further alternative forming roller;
FIGURE 7 shows a second embodiment of the present disclosure;
FIGURE 8 shows a third embodiment of the present disclosure;
FIGURES 9 and 10 show a fourth embodiment of the present disclosure;
FIGURE 11 shows a cross section of a corrugated web with a zig-zag profile; and
FIGURE 12 shows a cross section of a corrugated web with an undulating profile.

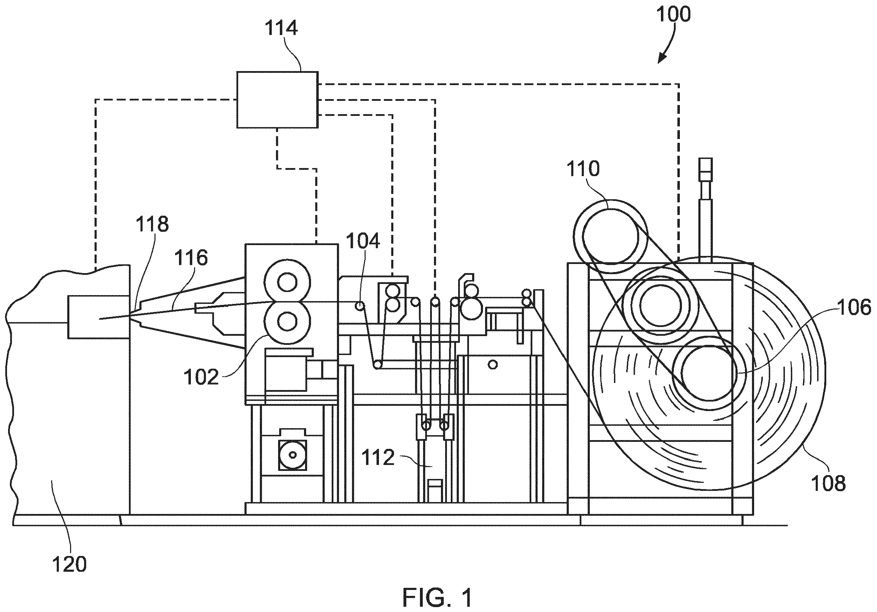

Figure 1 shows a prior art apparatus 100 for manufacturing a crimped web. The apparatus 100 comprises, among other components, a set of crimping rollers 102 including a first roller and a second roller, each of which is corrugated across its width. The set of crimping rollers 102 is arranged such that the corrugations of the first roller substantially interleave with the corrugations of the second roller. The apparatus 100 also comprises a lateral web cutting mechanism 104, a bobbin 106 of polylactic acid web material 108, a drive and brake mechanism 110, and a tensioning mechanism 112. Control electronics 114 are provided to control the apparatus 100 during operation.

In use, the drive and brake mechanism 110 feeds the web 108 in a longitudinal direction from the bobbin 106 to the set of crimping rollers 102 via the lateral web cutting mechanism 104, which cuts the web to the required width. The tensioning mechanism 112 ensures that the web 108 is fed to the set of crimping rollers 102 at the desired tension. The crimping rollers 102 force the web 108 between the interleaved corrugations of the first and second rollers to apply a plurality of longitudinally extending crimp corrugations to the web 108. In this manner, the web 108 is deformed by the crimping rollers 102 to form a crimped web 116. The crimped web 116 can then be gathered together and used to form an aerosol-cooling element or an aerosol-forming substrate for an aerosol-generating article, as discussed below. For example, the crimped web 116 can be gathered together by a funnel 118 and fed into a rod-making machine 120 to form a continuous rod which is subsequently cut into a plurality of rod-shaped components, each having a gathered crimped sheet formed from a cut portion of the crimped web. It will be noted that the prior art apparatus 100 occupies a relatively large footprint, and that any interruption of the function of the crimping rollers 102 will result in an immediate stopping of the downstream rod-making machine 120. Moreover, the temperature of the web 108 when it reaches the crimping rollers 102 will be ambient or room temperature, typically around 20 degrees Celsius, which is substantially below the glass transition temperature of polylactic acid. Accordingly, the polylactic acid web 108 will have a tendency to elastically resist the crimping process. This results in a significant tendency to resist deformation, which in turn may result in a substantial resetting force and other stress and contortion in the crimped material.

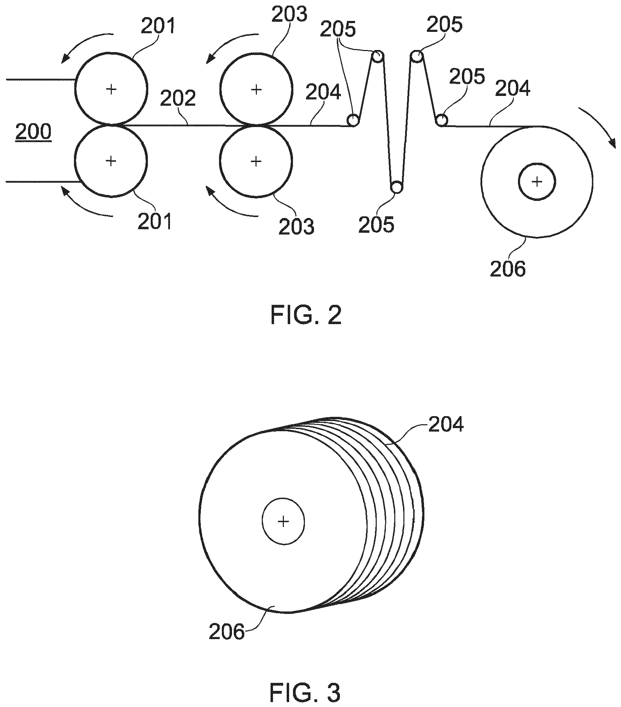

Figure 2 shows, in schematic form, a first embodiment of the present disclosure. A pool 200 of molten polylactic acid pellets is formed by heating the pellets to a temperature of at least the melting point temperature of polylactic acid, which is around 173 to 178 degrees Celsius. This may be done in a heating tank in a manner that is known in the art. Molten polylactic acid is passed between a pair of smooth rollers 201 so as to form a substantially flat polylactic acid web 202, as is also known in the art. The substantially flat polylactic acid web 202, while still at an elevated temperature, then passes between a pair of forming rollers 203. The forming rollers 203 each have substantially parallel circumferential corrugations along their surfaces, and the corrugations of one forming roller 203 preferably interleave with the corrugations of the other forming roller 203. The forming rollers 203 impart a corresponding corrugated profile to the polylactic acid web 202 while it is at the elevated temperature and therefore still soft and relatively malleable so as to form a corrugated polylactic acid web 204. The corrugated polylactic acid web 204 can then pass through a set of tensioning rollers 205. Then, the web cools to a temperature sufficiently below the glass transition temperature of the polylactic acid, thus allowing the corrugations to become set or thermally fixed in the web 204, before the corrugated polylactic acid web 204 is wound onto a bobbin 206. When the bobbin 206 is fully wound with corrugated polylactic acid web 204, the web 204 is cut across its width and the fully-wound bobbin 206 is replaced with an empty bobbin, which can then be wound with more of the corrugated polylactic acid web 204. This process is repeated in order to manufacture bobbins 206 wound with corrugated polylactic acid web 204.

Figure 3 shows a bobbin 206 fully wound with corrugated polylactic acid web 204. Such a bobbin 206 is used to feed a rod-making machine directly, thus avoiding the need for an additional web crimping step immediately upstream of the rod-making machine.

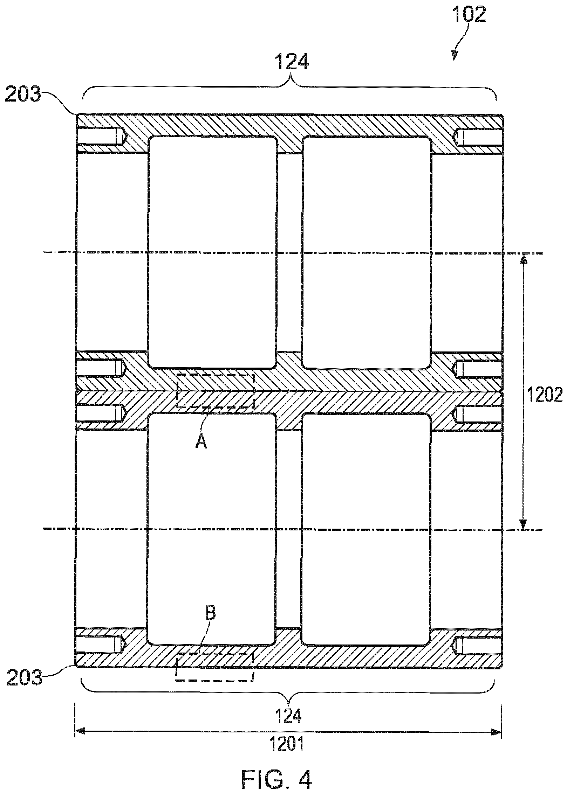

Figure 4 shows a cross-sectional view of the corrugated forming rollers 203 of the embodiment of Figure 2. There is shown first and second forming rollers 203, each of which is corrugated across its width 1201 in a corrugation zone 124. In this example, the corrugation zone 124 extends around the entire circumference of each roller and extends along substantially the entire width 1201 of each roller. Alternatively, one or both of the rollers could be corrugated across its width around only a portion of its circumference or along only a portion of its length, or around only a portion of its circumference and along only a portion of its length. The first and second rollers 203 are arranged such that their axes are substantially parallel and such that their corrugations are substantially interleaved. The distance 1202 between the axes of the first and second rollers 203 can be controlled to control the clearance between the corrugations of the first and second rollers 203 and thus the amplitude of the crimp corrugations applied to a polylactic acid web passed between the set of rollers 203.

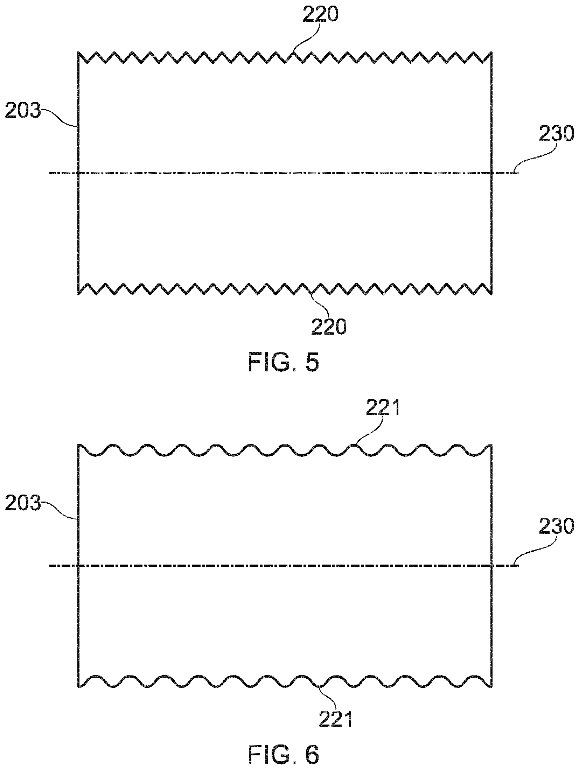

Figure 5 shows a schematic cross-sectional view through a corrugated forming roller 203 with an axis of rotation 230. The circumferential surface of the roller 203 is provided with a zig-zag corrugated profile 220, shown here in exaggerated scale. The zig-zag profile 220 has pointed peaks and troughs.

Figure 6 shows a schematic cross-sectional view through an alternative corrugated forming roller 203 with an axis of rotation 230. The circumferential surface of the roller 203 is provided with an undulating corrugated profile 221, shown here in exaggerated scale. The undulating profile 221 has curved peaks and troughs.

The corrugated profiles 220, 221 may have a substantially constant pitch or constant amplitude, or substantially constant pitch and constant amplitude. Alternatively, the corrugated profiles 220, 221 may have a varying pitch or varying amplitude or varying pitch and varying amplitude. These varying pitch or amplitude, may vary periodically or nonperiodically.

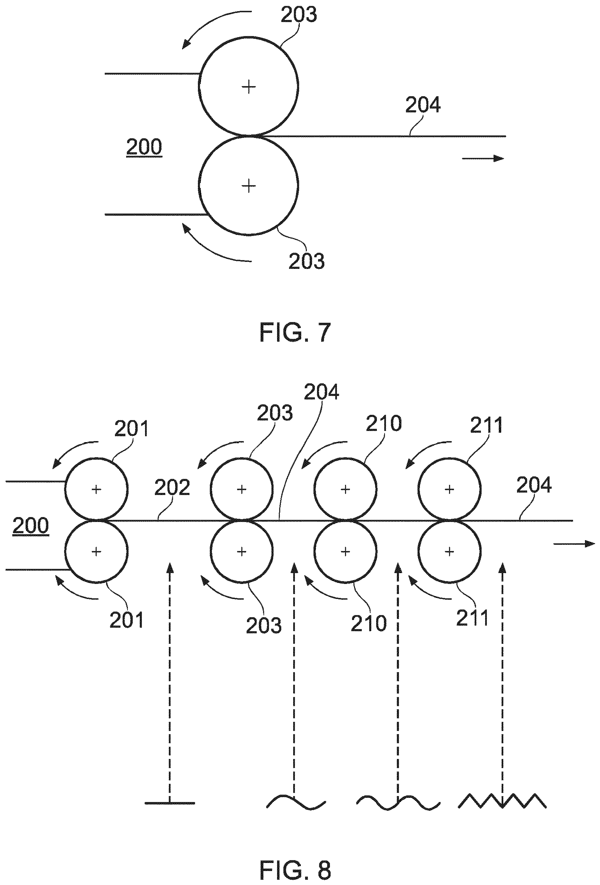

Figure 7 shows, in schematic form, a second embodiment of the present disclosure. A pool 200 of molten polylactic acid pellets is formed by heating the pellets to a temperature of at least the melting point temperature of polylactic acid, which is around 173 to 178 degrees Celsius. This may be done in a heating tank in a manner that is known in the art. Molten polylactic acid is passed directly between a pair of corrugated rollers 203 of the type discussed in relation to the first embodiment. This results in the direct formation of a corrugated polylactic acid web 204, without the need for a pair of smooth rollers 201.

Figure 8 shows, in schematic form, a third embodiment of the present disclosure. A pool 200 of molten polylactic acid pellets is formed by heating the pellets to a temperature of at least the melting point temperature of polylactic acid, which is around 173 to 178 degrees Celsius. This may be done in a heating tank in a manner that is known in the art. Molten polylactic acid is passed directly between a pair of smooth rollers 201 so as to form a substantially flat polylactic acid web 202, as is also known in the art. The substantially flat polylactic acid web 202, while still at an elevated temperature, then passes between a first pair of forming rollers 203. The forming rollers 203 each have substantially parallel circumferential corrugations along their surfaces, and the corrugations of one forming roller 203 preferably interleave with the corrugations of the other forming roller 203. The forming rollers 203 impart a first corresponding corrugated profile to the polylactic acid web 202 while it is at the elevated temperature and therefore still soft and relatively malleable so as to form a corrugated polylactic acid web 204. The soft and malleable corrugated polylactic acid web 204 is then passed between a second pair of forming rollers 210, and then between a third pair of forming rollers 211. The forming rollers 210 have a smaller corrugation pitch than the forming rollers 203, and the forming rollers 211 have a smaller corrugation pitch than the forming rollers 210. In this way, a progressively smaller corrugation pitch pattern is applied to the polylactic acid web 204 as it passes between the second and third pairs of forming rollers 210, 211, as indicated schematically in Figure 8.

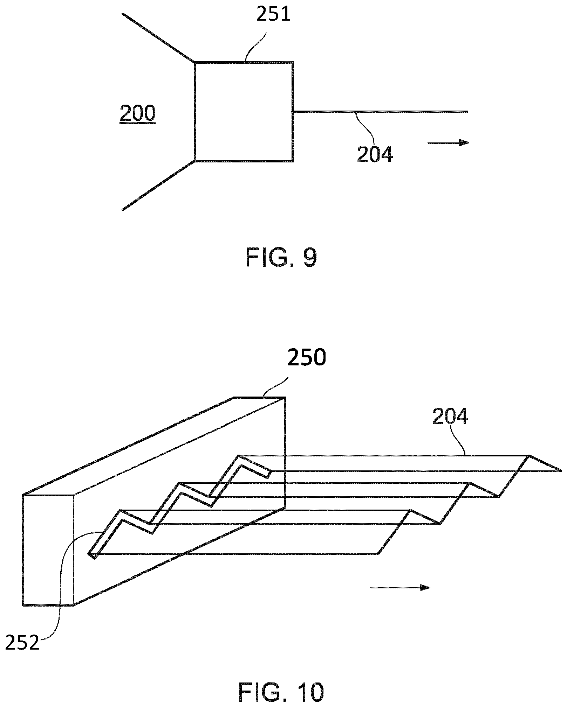

Figures 9 and 10 show, in schematic form, a fourth embodiment of the present disclosure. A pool 200 of molten polylactic acid pellets is formed by heating the pellets to a temperature of at least the melting point temperature of polylactic acid, which is around 173 to 178 degrees Celsius. This may be done in a heating tank in a manner that is known in the art. Molten polylactic acid is then forced through an extrusion tank 251 having an extrusion die 250 with an extrusion orifice 252. The extrusion orifice 252 has a corrugation pattern corresponding to the desired corrugation pattern of an extruded corrugated polylactic acid web 204, as shown in Figure 10. Although a zig-zag corrugation profile is shown here, other corrugation profiles such as undulating profiles may be implemented.

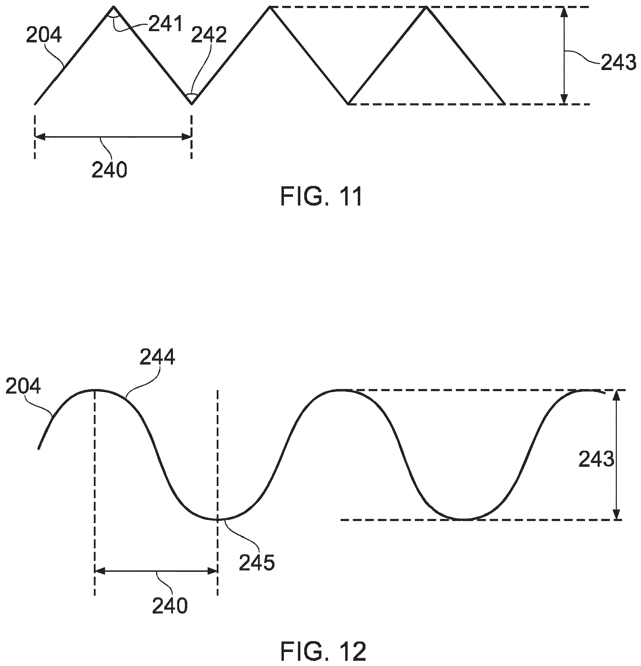

Figure 11 shows a cross section of a corrugated polylactic acid web 204 having a zig-zag profile with pointed peaks and troughs. By appropriate configuration of the corrugations in the forming rollers 203 or the extrusion orifice 252, it is possible to impart desired values to various parameters of the corrugation profile, including the pitch 240, the peak angle 241, the trough angle 242 and the amplitude 243. As mentioned before, while any, some or all of these parameters of pitch 240, peak angle 241, trough angle 242 and the amplitude 243 may be constant, each of the values may also vary periodically or randomly across the width of the material. Such a variation of some or all of these parameters may avoid nesting of troughs within the gathered rod.

Figure 12 shows a cross section of a corrugated polylactic acid web 204 having an undulating profile with rounded peaks and troughs. By appropriate configuration of the corrugations in the forming rollers 203 or the extrusion orifice 252, it is possible to impart desired values to various parameters of the corrugation profile, including the pitch 240, the peak curvature 244, the trough curvature 245 and the amplitude 243.

## Claims

1. A method of manufacturing a corrugated polymeric material web (204) for an aerosol-generating article, the method comprising the steps of:
heating polymeric material pellets to form a polymeric material melt (200);
forming a polymeric material web (202) from the polymeric material melt (200) and working the polymeric material web (200) at an elevated temperature to form a corrugated polymeric material web (204); and
winding the corrugated polymeric material web (204) onto a bobbin (206).

2. A method according to claim 1, wherein working the polymeric material web (202) comprises passing the polymeric material web (202) between at least two crimping rollers (203, 210, 211) to form the corrugated polymeric material web (204).

3. A method according to claim 1, wherein the polymeric material melt (200) is first passed between at least two smooth rollers (201) to form the polymeric material web (202), and wherein the polymeric material web (202) is subsequently passed between at least two crimping rollers (203, 210, 211) while at the elevated temperature.

4. A method according to claim 3, wherein the polymeric material web (202) is passed between multiple sets of crimping rollers (203, 210, 211).

5. A method according to claim 1, wherein the polymeric material melt (200) is first passed between at least two smooth rollers (201) to form the polymeric material web (202), and wherein the polymeric material web (202) is subsequently passed over or between shaping members configured to impart corrugations to the polymeric material web (202) while at the elevated temperature.

6. A method according to claim 1, wherein forming a polymeric material web (202) from the polymeric material melt (200) and working the polymeric material web (202) comprises extruding the polymeric material melt (200) through an extrusion die (250) with a corrugated profile (252) so as to form the corrugated polymeric material web (204).

7. A method according to claim 6, wherein the corrugated polymeric material web (204) is passed over or between shaping members configured to impart further corrugations to the corrugated polymeric material web (204) while at the elevated temperature.

8. A method according to any preceding claim, wherein the elevated temperature is a temperature higher than a temperature 20 degrees Celsius below the glass transition temperature of the polymeric material, optionally a temperature higher than a temperature 10 degrees Celsius below the glass transition temperature of the polymeric material, optionally a temperature higher than a temperature 5 degrees Celsius below the glass transition temperature of the polymeric material, or optionally a temperature not less than the glass transition temperature of the polymeric material.

9. A method according to any preceding claim, wherein the corrugated polymeric material web (204) has an undulating corrugated profile with curved peaks and troughs.

10. A method according to any preceding claim, wherein the polymeric material is polylactic acid.

11. A method according to any one of claims 1 to 9, wherein the polymeric material is selected from the group consisting of: polyethylene, polypropylene, polyvinylchloride, polyethylene terephthalate, and cellulose acetate.

12. A method according to any one of claims 1 to 9, wherein the polymeric material has a glass transition temperature in a range from 40 degrees Celsius to 85 degrees Celsius, and a melting point in a range from 123 degrees Celsius to 228 degrees Celsius.

13. A method of forming rod-shaped articles, comprising gathering a corrugated polymeric material web (204) into a substantially cylindrical bundle by way of a funnel, wrapping the bundle in a wrapper to form a wrapped bundle, and cutting the wrapped bundle into rod-shaped lengths, **characterised in that** the corrugated polymeric material web (204) is unwound in a corrugated state from a bobbin (206) prior to gathering.

14. A method according to claim 13, wherein the bobbin (206) of corrugated polymeric material web (204) is made by the method of any one of claims 1 to 12.

15. A rod-making apparatus comprising a bobbin (206) wound with a corrugated polymeric web (204), a funnel to gather the corrugated polymeric material web (204) into a substantially cylindrical bundle after the corrugated polymeric material web (204) has been unwound from the bobbin (206) in a corrugated state, a wrapper to wrap the bundle so as to form a wrapped bundle, and a cutter to cut the wrapped bundle into rod-shaped lengths.

## Patentansprüche

1. Verfahren zum Herstellen einer gewellten Polymermaterialbahn (204) für einen aerosolerzeugenden Artikel, das Verfahren umfassend die folgenden Schritte:
Erwärmen von Polymermaterialgranulat, um eine Polymermaterialschmelze (200) zu bilden;
Bilden einer Polymermaterialbahn (202) aus der Polymermaterialschmelze (200) und Bearbeiten der Polymermaterialbahn (200) bei einer erhöhten Temperatur, um eine gewellte Polymermaterialbahn (204) zu bilden; und
Wickeln der gewellten Polymermaterialbahn (204) auf eine Spule (206).

2. Verfahren nach Anspruch 1, wobei ein Bearbeiten der Polymermaterialbahn (202) ein Hindurchführen der Polymermaterialbahn (202) zwischen wenigstens zwei Wellwalzen (203, 210, 211) umfasst, um die gewellte Polymermaterialbahn (204) zu bilden.

3. Verfahren nach Anspruch 1, wobei die Polymermaterialschmelze (200) zunächst zwischen wenigstens zwei glatten Walzen (201) hindurchgeführt wird, um die Polymermaterialbahn (202) zu bilden, und wobei die Polymermaterialbahn (202) anschließend bei der erhöhten Temperatur zwischen wenigstens zwei Wellwalzen (203, 210, 211) hindurchgeführt wird.

4. Verfahren nach Anspruch 3, wobei die Polymermaterialbahn (202) zwischen mehreren Sätzen von Wellwalzen (203, 210, 211) hindurchgeführt wird.

5. Verfahren nach Anspruch 1, wobei die Polymermaterialschmelze (200) zunächst zwischen wenigstens zwei glatten Walzen (201) hindurchgeführt wird, um die Polymermaterialbahn (202) zu bilden, und wobei die Polymermaterialbahn (202) anschließend über oder zwischen Formgebungselementen hindurchgeführt wird, die dazu eingerichtet sind, der Polymermaterialbahn (202) Wellungen zu verleihen, während sie sich bei der erhöhten Temperatur befindet.

6. Verfahren nach Anspruch 1, wobei ein Bilden einer Polymermaterialbahn (202) aus der Polymermaterialschmelze (200) und ein Bearbeiten der Polymermaterialbahn (202) ein Extrudieren der Polymermaterialschmelze (200) durch eine Extrusionsdüse (250) mit einem gewellten Profil (252) umfasst, um die gewellte Polymermaterialbahn (204) zu bilden.

7. Verfahren nach Anspruch 6, wobei die gewellte Polymermaterialbahn (204) über oder zwischen Formgebungselementen geführt wird, die dazu eingerichtet sind, der gewellten Polymermaterialbahn (204) weitere Wellungen zu verleihen, während sie sich bei erhöhter Temperatur befindet.

8. Verfahren nach einem beliebigen vorhergehenden Anspruch, wobei die erhöhte Temperatur eine höhere Temperatur als eine Temperatur von 20 Grad Celsius unter der Glasübergangstemperatur des Polymermaterials, optional eine höhere Temperatur als eine Temperatur von 10 Grad Celsius unter der Glasübergangstemperatur des Polymermaterials, optional eine höhere Temperatur als eine Temperatur von 5 Grad Celsius unter der Glasübergangstemperatur des Polymermaterials oder optional eine Temperatur nicht unter der Glasübergangstemperatur des Polymermaterials ist.

9. Verfahren nach einem beliebigen vorhergehenden Anspruch, wobei die gewellte Polymermaterialbahn (204) ein wellenförmiges Wellenprofil mit gekrümmten Spitzen und Mulden aufweist.

10. Verfahren nach einem beliebigen vorhergehenden Anspruch, wobei das Polymermaterial Polymilchsäure ist.

11. Verfahren nach einem beliebigen der Ansprüche 1 bis 9, wobei das Polymermaterial ausgewählt ist aus der Gruppe bestehend aus: Polyethylen, Polypropylen, Polyvinylchlorid, Polyethylenterephthalat und Celluloseacetat.

12. Verfahren nach einem beliebigen der Ansprüche 1 bis 9, wobei das Polymermaterial eine Glasübergangstemperatur in einem Bereich von 40 Grad Celsius bis 85 Grad Celsius und einen Schmelzpunkt in einem Bereich von 123 Grad Celsius bis 228 Grad Celsius aufweist.

13. Verfahren zum Bilden stabförmiger Artikel, umfassend Zusammenfassen einer gewellten Polymermaterialbahn (204) zu einem im Wesentlichen zylindrischen Bündel mittels eines Trichters, Umhüllen des Bündels mit einer Umhüllung, um ein umhülltes Bündel zu bilden, und Schneiden des umhüllten Bündels in stabförmige Längen, **dadurch gekennzeichnet, dass** die gewellte Polymermaterialbahn (204) vor dem Zusammenfassen in einem gewellten Zustand von einer Spule (206) abgewickelt wird.

14. Verfahren nach Anspruch 13, wobei die Spule (206) aus gewellter Polymermaterialbahn (204) durch das Verfahren nach einem der Ansprüche 1 bis 12 hergestellt wird.

15. Stabherstellungsvorrichtung, umfassend eine Spule (206), die mit einer gewellten Polymermaterialbahn (204) gewickelt ist, einen Trichter, um die gewellte Polymermaterialbahn (204) zu einem im Wesentlichen zylindrischen Bündel zusammenzufassen, nachdem die gewellte Polymermaterialbahn (204) von der Spule (206) in einem gewellten Zustand abgewickelt wurde, eine Umhüllung, um das Bündel zusammenzufassen, um ein umhülltes Bündel zu bilden, und einen Schneider, um das umhüllte Bündel in stabförmige Längen zu schneiden.

## Revendications

1. Procédé de d'une bande de matériau polymère ondulée (204) pour un article de génération d'aérosol, le procédé comprenant les étapes consistant à :
chauffer des pastilles de matériau polymère pour former un matériau polymère en fusion (200) ;
former une bande de matériau polymère (202) à partir de du matériau polymère en fusion (200) et le travail de la bande de matériau polymère (200) à une température élevée pour former une bande de matériau polymère ondulée (204) ; et
enrouler la bande de matériau polymère ondulée (204) sur une bobine (206).

2. Procédé selon la revendication 1, dans lequel le travail de la bande de matériau polymère (202) comprend le passage de la bande de matériau polymère (202) entre au moins deux rouleaux de crêpage (203, 210, 211) pour former la bande de matériau polymère ondulée (204).

3. Procédé selon la revendication 1, dans lequel le matériau polymère en fusion (200) est d'abord passé entre au moins deux rouleaux lisses (201) pour former la bande de matériau polymère (202), et dans lequel la bande de matériau polymère (202) est ensuite passée entre au moins deux rouleaux de crêpage (203, 210, 211) tout en étant à la température élevée.

4. Procédé selon la revendication 3, dans lequel la bande de matériau polymère (202) est passée entre de multiples ensembles de rouleaux de crêpage (203, 210, 211).

5. Procédé selon la revendication 1, dans lequel le matériau polymère en fusion (200) est d'abord passé entre au moins deux rouleaux lisses (201) pour former la bande de matériau polymère (202), et dans lequel la bande de matériau polymère (202) est ensuite passée sur ou entre des organes de mise en forme configurés pour conférer des ondulations à la bande de matériau polymère (202) tout en étant à la température élevée.

6. Procédé selon la revendication 1, dans lequel la formation d'une bande de matériau polymère (202) à partir du matériau polymère en fusion (200) et le travail de la bande de matériau polymère (202) comprend l'extrusion du matériau polymère en fusion (200) à travers une filière d'extrusion (250) avec un profil ondulé (252) de manière à former la bande de matériau polymère ondulée (204).

7. Procédé selon la revendication 6, dans lequel la bande de matériau polymère ondulée (204) est passée sur ou entre des organes de mise en forme configurés pour conférer des ondulations supplémentaires à la bande de matériau polymère ondulée (204) tout en étant à la température élevée.

8. Procédé selon l'une quelconque des revendications précédentes, dans lequel la température élevée est une température supérieure à une température de 20 degrés Celsius en dessous de la température de transition vitreuse du matériau - polymère, facultativement une température supérieure à une température de 10 degrés Celsius inférieure à la température de transition vitreuse du matériau polymère, facultativement une température supérieure à une température de 5 degrés Celsius inférieure à la température de transition vitreuse du matériau polymère, ou facultativement une température non inférieure à la température de transition vitreuse du matériau polymère.

9. Procédé selon l'une quelconque des revendications précédentes, dans lequel la bande de matériau polymère ondulée (204) a un profil ondulé ondulé avec des crêtes et des creux incurvés.

10. Procédé selon l'une quelconque des revendications précédentes, dans lequel le matériau polymère est de l'acide polylactique.

11. Procédé selon l'une quelconque des revendications 1 à 9, dans lequel le matériau polymère est choisi dans le groupe constitué par : polyéthylène, polypropylène, chlorure de polyvinyle, téréphtalate de polyéthylène et acétate de cellulose.

12. Procédé selon l'une quelconque des revendications 1 à 9, dans lequel le matériau polymère a une température de transition vitreuse dans une plage de 40 degrés Celsius à 85 degrés Celsius, et un point de fusion dans une plage de 123 degrés Celsius à 228 degrés Celsius.

13. Procédé de formage d'articles en forme de tige, comprenant les étapes consistant à froncer une bande de matériau polymère ondulée (204) en un faisceau sensiblement cylindrique au moyen d'un entonnoir, envelopper le faisceau dans une enveloppe pour former un faisceau enveloppé, et découper le faisceau enveloppé en longueurs en forme de tige, **caractérisé en ce que** la bande de matériau polymère ondulée (204) est déroulée dans un état ondulé à partir d'une bobine (206) avant fronçage.

14. Procédé selon la revendication 13, dans lequel la bobine (206) de bande de matériau polymère ondulée (204) est fabriquée par le procédé selon l'une quelconque des revendications 1 à 12.

15. Appareil de fabrication de tiges comprenant une bobine (206) enroulée avec une bande polymère ondulée (204), un entonnoir pour froncer la bande de matériau polymère ondulée (204) en un faisceau sensiblement cylindrique après le déroulement de la bande de matériau polymère ondulée (204) de la bobine (206) dans un état ondulé, une enveloppe pour envelopper le faisceau afin de former un faisceau enveloppé, et un dispositif de coupe pour couper le faisceau enveloppé en longueurs en forme de tige.
